# EUROPEAN PATENT APPLICATION

(11) **EP 1 804 421 A2**
(43) Date of publication of application: **04.07.2007**
(21) Application number: 06025819.1
(22) Date of filing: 13.12.2006
(51) Int. Cl.: H04L 12/18, H04L 12/56

(54) **System and method for controlling multicasting service**

(30) Priority: 27.12.2005 KR 20050130953
(71) Applicant: Samsung Electronics Co., Ltd., Yeongtong-gu Suwon-si, Gyeonggi-do (KR)
(72) Inventor: Lee, Ki-Cheol, Giheung-gu, Yongin-si Gyeonggi-do (KR); Nam, Kee-Sung, Seoul (KR)
(74) Representative: Lang, Johannes

(57) **Abstract**

In a system and method for guaranteeing quality of service (QoS) of a multicasting service, when a multicasting source or a receiving terminal is newly registered, or a router or the receiving terminal leaves an existing multicasting group, a topology and a resource state of a network is retrieved, and a determination is made as to whether to provide a new multicasting service based on the retrieved network resource state. Thus, multicasting-based high-quality multimedia service can be provided to users.

## Description

### BACKGROUND OF THE INVENTION

### Technical Field

The present invention relates to a system and method for controlling a multicasting service, the system and method being capable of guaranteeing quality of service (QoS) of the multicasting service.

### Related Art

Conventional networks have been classified into wired/wireless networks, voice/data networks, and broadcast/communication networks. Each class of network provides services to users in a different manner. A wired/wireless combined network, a voice/data combined network, and a broadcast/communication combined network have been actively studied and developed as Next Generation Networks (NGNs). NGNs are expected to be built as Internet protocol (IP)-based high-quality, mass-capacity packet networks. With the advent of NGNs, high-quality multimedia services, such as digital video service, high definition video on demand (VoD), and mass capacity network games, evolved from conventional services, will be provided to users. The high definition multimedia services include interactive TV, on-demand TV, video conferencing, digital TV, and high definition streaming video services, which will be provided to users based on IP. An IP unicast routing protocol and an IP multicasting protocol are needed to provide the multimedia services to the users on the IP network. Examples of IP multicasting protocols include Distance Vector Multicast Routing Protocol (DVMRP), Multicast Open Shortest Path First (MOSPF), Core Based Tree (CBT), Protocol Independent Multicast-Dense Mode (PIM-DM), and Protocol Independent Multicast-Sparse Mode (PIM-SM). It has been reported that PIM-SM exhibits the best performance in view of scalability and interoperability. PIM-SM is supported by most currently available layer 3 switches.

The conventional PIM-SM multicasting protocol cannot guarantee quality of service (QoS) of existing services since it accommodates new sources irrespective of the network resource state, as described above. If a shared tree is formed between the rendezvous point and the third and fourth routers, which are service termination routers, the multicasting data are transmitted and received irrespective of the network resource state. This degrades QoS. Furthermore, since a registration process is performed and packets are transmitted and received even when there is no receiving terminal for the multicasting group, network resources of routers are wasted.

### SUMMARY OF THE INVENTION

Accordingly, it is an object of the present invention to provide a system and method for controlling a multicasting service, the system and method being capable of retrieving a network resource state of at least one router and determining whether to provide a new multicasting service based on a spare network resources state.

According to an aspect of the present invention, a multicasting service network comprises: at least one receiving terminal for receiving a multicasting service; at least one router for relaying a multicasting service packet from a multicasting source to the receiving terminal; and a multicasting service QoS controller for collecting network resource states of the routers so as to recognize spare network resources, and for determining whether the router receives a multicasting packet from a new multicasting source or transmits the multicasting packet to a new receiving terminal.

The multicasting service network transmits the multicasting packet using at least one of Distance Vector Multicast Routing Protocol (DVMRP), Multicast Open Shortest Path First (MOSPF), Core Based Tree (CBT), Protocol Independent Multicast-Dense Mode (PIM-DM), and Protocol Independent Multicast-Sparse Mode (PIM-SM). The network resource comprises at least one of bandwidth, delay time, and delay variance information.

The multicasting service QoS controller compares resources needed for new multicasting packet transmission and reception to spare network resources, and controls a router having insufficient spare network resources so as to drop the new multimedia packet.

Furthermore, the multicasting service QoS controller may employ a policy for classifying the multicasting services according to at least one class, and allocating to each class maximum network resources, which is a maximum amount of available network resources. According to the policy, the multicasting service QoS controller may control in such a manner as to decrease maximum network resources allocated to a class having spare network resources and increase maximum network resources allocated to a class to which a new multicasting packet belongs when there are insufficient spare resources for new multicasting packet transmission and reception.

More preferably, the multicasting service QoS controller controls a router to drop a multicasting packet, the router comprising an input/output interface, the multicasting packet transmission state of which is a prune state.

The multicasting service QoS controller preferably re-collects a network resource state when at least one of registration or leaving of a receiving terminal for multicasting service, switching of a multicasting packet transmission state of an input/output interface of a router, and lapse or expiration of a predetermined update time occurs.

According to another aspect of the present invention, a multicasting service QoS controller system comprises: a router connection module for communicating with at least one router; a topology/resource manager module for collecting network resources of the routers using the router connection module to recognize spare network resources; and a call admission control manager module for receiving the spare network resources from the topology/resource manager module, and for determining whether the router receives a multicasting packet from a new multicasting source or transmits the multicasting packet to the new receiving terminal.

In this case, the system further comprises: a policy manager module for managing a network operation policy according to the network resource state; and a policy deploy module for converting and delivering the network operation policy as instructions in a language that can be interpreted by the router.

Furthermore, the topology/resource manager module preferably comprises a resource management table, and the resource management table may store at least one of router identification (ID), interface ID, total bandwidth, multicasting class, class bandwidth, total used bandwidth, and unused bandwidth information.

According to still another aspect of the present invention, a method for controlling a multicasting service comprises the steps of: collecting network resource information from at least one router so as to recognize spare network resources of each router; requesting, by a new multicasting receiving terminal or a new multicasting source, one of the routers to provide the multicasting service; and determining whether the router receives a multicasting packet from the new multicasting source using the spare network resources or transmits the multicasting packet to the new receiving terminal.

In this case, the multicasting packet transmission and reception are preferably performed using at least one of DVRMP, MOSPF, CBT, PIM-DM and PIM-SM. The step of collecting the network resource may comprise collecting at least one of inter-router bandwidth, inter-router delay time, and inter-router delay variance information. The method may further comprise the step of storing at least one of router ID, interface ID, total bandwidth, multicasting class, class bandwidth, total used bandwidth, and unused bandwidth information.

The method preferably further comprises the steps of: comparing resources needed to transmit and receive the new multicasting packet to spare network resources, and allowing a router having insufficient spare network resources to drop the new multimedia packet; classifying multicasting services according to at least one class and allocating maximum network resources to each class; decreasing maximum network resources allocated to a class having spare network resources, and increasing maximum network resources allocated to a class to which a new multicasting packet belongs when there are insufficient spare resources for new multicasting packet transmission and reception; controlling a router to drop a multicasting packet, the router comprising an input/output interface, the multicasting packet transmission state of which is a prune state; and controlling so as to re-collect network resource states of at least one router when at least one of registration or leaving of a receiving terminal for multicasting service, switching of a multicasting packet transmission state of an input/output interface of a router, and lapse or expiration of a predetermined update time occurs.

According to yet another aspect of the present invention, a method for controlling a multicasting service using a Protocol Independent Multicast-Sparse Mode (PIM-SM) comprises the steps of: requesting, by a new multicasting source, an arbitrary router to provide a multicasting service; collecting unused bandwidth information of a link between the router and a rendezvous point; and, when the unused bandwidth of the link is smaller than a bandwidth needed to use a new multicasting service, controlling the router so as not to receive a multicasting packet from the new multicasting source.

According to yet another aspect of the present invention, a method for controlling a multicasting service using PIM-SM comprises the steps of: collecting unused bandwidth information of a link between a router input/output interface and a receiving terminal; and, when the unused bandwidth of the link is smaller than a bandwidth needed to use a new multicasting service, operating the router so as to drop a multicasting packet received from a multicasting source.

In this case, the method for controlling a multicasting service using PIM-SM includes the steps of: requesting, by a new receiving terminal, a rendezvous point to provide a multicasting service via a router in a prune state; collecting unused bandwidth information of a link between the rendezvous point and a router; and, when the unused bandwidth of the link is greater than a bandwidth needed to provide a new multicasting service, transmitting a multicasting packet to the receiving terminal via the rendezvous point and the router.

According to yet another aspect of the present invention, a method for controlling a multicasting service using PIM-SM comprises the steps of: leaving, by at least one receiving terminal connected to a rendezvous point, a multicasting service group; and, when all of the receiving terminals connected to the rendezvous point leave the multicasting service group, controlling a router connected to a source providing multicasting packets to the multicasting service group so as to drop the multicasting packets.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a block diagram of the operation of a multicasting network using PIM-SM;
FIG. 2 is a block diagram of a multicasting network including a multicasting service QoS controller according to an exemplary embodiment of the present invention;
FIG. 3 is a block diagram of the internal structure of a multicasting service QoS controller according to an exemplary embodiment of the present invention;
FIG. 4A is a block diagram of a multicasting network when a resource does not exist on a path from a source to a rendezvous point;
FIG. 4B is a flowchart of a method for controlling a multicasting service which is applied in the case of FIG. 4A according to another exemplary embodiment of the present invention;
FIG. 5A is a block diagram of a multicasting network when a link having a resource and a link having no resource exist on a shared tree;
FIG. 5B is a flowchart of a method for controlling a multicasting service which is applied in the case of FIG. 5A according to another embodiment of the present invention;
FIG. 6A is a block diagram of a multicasting network when an input/output interface of a rendezvous point is switched from a prune state to a forward state;
FIG. 6B is a flowchart of a method for controlling a multicasting service which is applied in the case of FIG. 6A according to another embodiment of the present invention;
FIG. 7A is a block diagram of a multicasting network when an input/output interface of a rendezvous point is switched from a forward state to a prune state;
FIG. 7B is a flowchart of a method for controlling a multicasting service which is applied in the case of FIG. 7A according to another embodiment of the present invention;
FIG. 8A is a block diagram of a multicasting network when a shared tree for a multicasting group is not formed on a rendezvous point;
FIG. 8B is a flowchart of a method for controlling a multicasting service which is applied in the case of FIG. 8A according to another embodiment of the present invention;
FIG. 9A is a block diagram of a multicasting network when a shared tree for a multicasting group is formed on a rendezvous point; and
FIG. 9B is a flowchart of a method for controlling a multicasting service which is applied in the case of FIG. 9A according to another embodiment of the present invention.

### DETAILED DESCRIPTION OF THE INVENTION

The multicasting service control system and method according to the present invention will now be described more fully with reference to the accompanying drawings, in which exemplary embodiments of the invention are shown.

First, an (S,G) state used in PIM-SM will be described. The symbols are for identifying multicasting groups. Session traffic is identified by a source S and a multicasting group address G. In (*,G), * denotes a wild card indicating all sources sent to the group G, and G denotes a multicasting group. Accordingly, querying (*,G) state to any router means querying whether multicasting packets belonging to the group G are received from all sources.

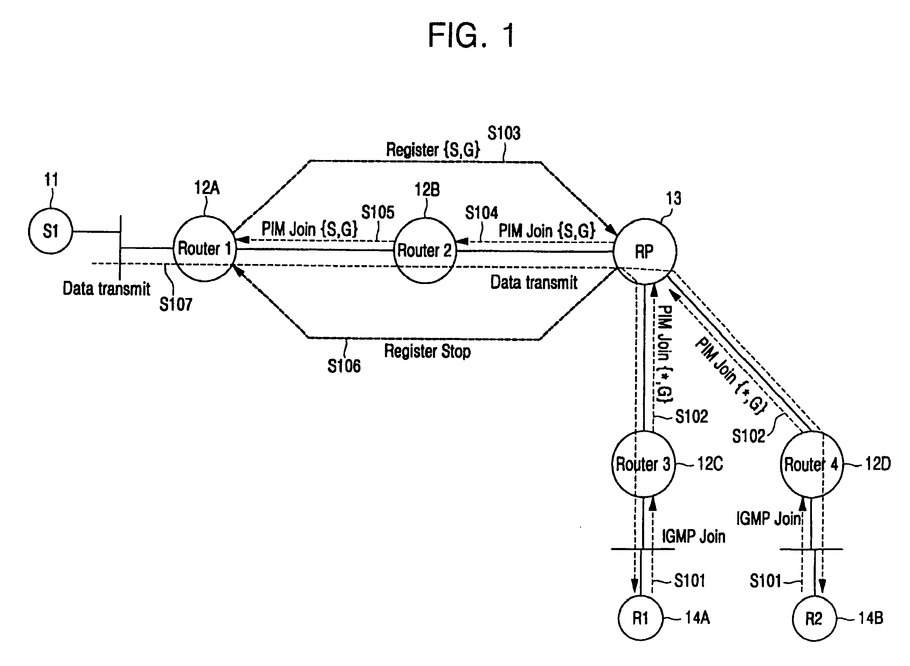

FIG. 1 is a block diagram of the operation of a multicasting network using PIM-SM.

Referring to FIG. 1, an IP network may include a source 11, routers 12A, 12B, 12C and 12D, a rendezvous point 13, and receiving terminals 14A and 14B.

The first and second receiving terminals 14A and 14B, respectively, join in a multicasting group G to receive a multicasting service. For this, the first and second receiving terminals 14a and 14b, respectively, first transmit an Internet Group Management Protocol (IGMP) join message to the third and fourth routers 12C and 12D, respectively, so as to join in the multicasting group G (S101). The third and fourth routers 12C and 12D, respectively, join in the multicasting group G of the rendezvous point 13 through a PIM join message (S102). After registration with the rendezvous point 13 is completed, a shared tree for the multicasting group G from the rendezvous point 13 to the third and fourth routers 12C and 12D, respectively, is formed.

As described above, the source 11 providing the multicasting service transmits a multicasting packet to the first router 12A. In response to receiving the multicasting packet, the first router 12A transmits a registration message to the rendezvous point 13 (S103), and the rendezvous point 13 begins to form the source tree for the multicasting group G using the registration message. The rendezvous point 13 transmits the PIM join message to the second router 12B (S104) so as to request to join in the multicasting group. The second router 12B again transmits the PIM join message to the first router 12A (S105) so as to complete the source tree for the multicasting G group of the first router 12A.

If the source tree from the first router 12A to the rendezvous point 13 is formed as described above, the rendezvous point 13 transmits a registration stop message to the first router 12A so as to terminate the registration process (S106). After the registration process, the multicasting packets can be transmitted from the source 11 to the receiving terminals 14a and 14b using PIM-SM (S107).

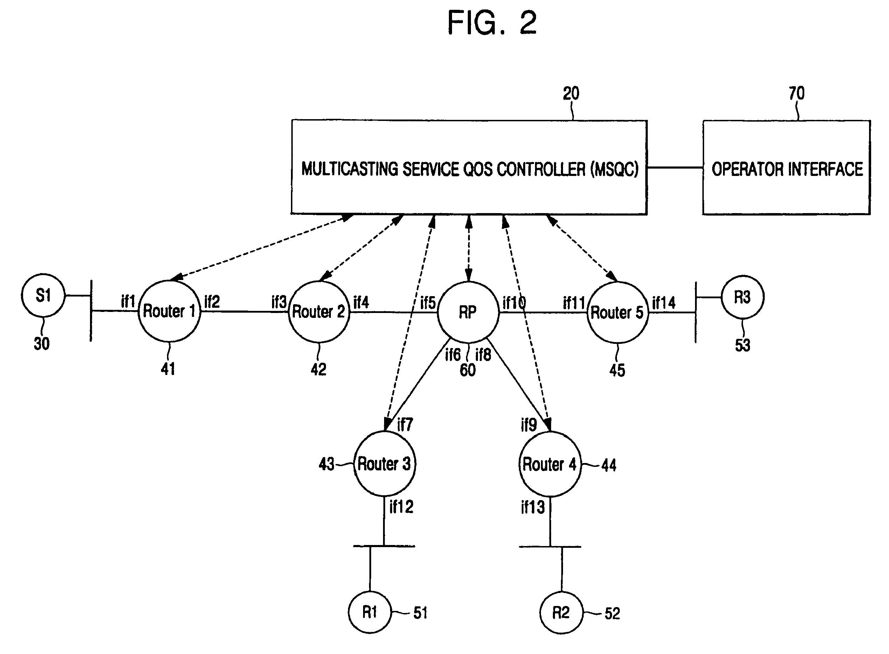

FIG. 2 is a block diagram of a multicasting network including a multicasting service QoS controller according to an exemplary embodiment of the present invention.

Referring to FIG. 2, an IP network for providing Internet service includes receiving terminals 51 to 53, routers 41 to 45, a rendezvous point 60, a source 30, and a multicasting service QoS controller (MSQC) 20.

The receiving terminals 51 to 53 provide a multicasting service to users. The receiving terminals 51 to 53 receive multicasting packets from the routers 41 to 45, and provide packet-based service to the users. The multicasting source 30 outputs packets for the multicasting service.

The routers 41 to 45 and the rendezvous point 60 relay multicasting packets from the multicasting source 30 to the receiving terminals 51 to 53. The routers 41 to 45 or the rendezvous point 60 include input/output interfaces if1 to if14, respectively. The routers 41 to 45 route the multicasting packets to other routers 41 to 45 or to the receiving terminals 51 to 53 via the input/output interfaces if1 to if14.

In order to multicast packets, the routers 41 to 45 and the rendezvous point 60 should use at least one multicasting protocol. Multicasting protocols include DVMRP, MOSPF, CBT, PIM-DM, and PIM-SM as previously described.

An operator interface 70 controls the multicasting service QoS controller 20 according to instructions from an operator, and the multicasting service QoS controller 20 displays control states of the various network components.

The multicasting service QoS controller (MSQC) 20 serves to control QoS of the multicasting service, which corresponds to a core technical spirit of the present invention. Referring to FIG. 2, the multicasting service QoS controller 20 connects to the routers 41 to 45 and the rendezvous point 60 providing the multicasting service to collect and manage network resource states of links between the routers, links between the routers and the rendezvous point, and states of the input/output interfaces of the routers. Furthermore, the multicasting service QoS controller 20 controls the routers 41 to 45 and the rendezvous point 60 by transmitting a policy set according to the collected network resource states.

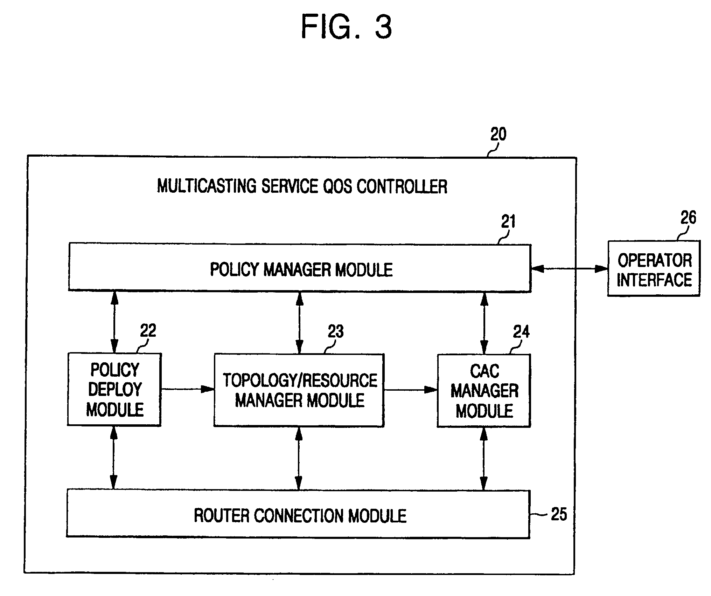

FIG. 3 is a block diagram of the internal structure of the multicasting service QoS controller according to an exemplary embodiment of the present invention.

Referring to FIG. 3, the multicasting service QoS controller 20 includes a policy manager module (PM) 21, a policy deploy module (PDM) 22, a topology/resource manager module (TRM) 23, a call admission control (CAC) manager module 24, and a router connection module (RCM) 25.

The policy manager module 21 performs a policy function of controlling/managing IP network resources. The policy deploy module 22 receives policy from the policy manager module 21, and translates and outputs the policy into instructions that can be interpreted by network components, such as a router. The topology/resource manager module 23 determines changes in the topology and resources of components included in the multicasting network. The call admission control manager module 24 controls call setup with other components on the network, and determines whether to accept the multicasting service. The router connection module 25 instructs the routers 41 to 45 or collects information using Simple Network Management Protocol (SNMP), Command Line Interface (CLI), Transmission Control Protocol/Internet Protocol (TCP/IP), and the like.

First, the multicasting service QoS controller 20 collects the topology and resources of the IP network to be controlled and managed via the router connection module 25. The collected topology and resources of the network may be managed through a resource table included in the topology/resource manager module 23. Table 1 below is an example of such a resource table.

**Table 1**

| Link ID | Router ID | Interface ID | Router ID | Interface ID | Link Bandwidth | | Class ID | Class BW | |
|---|---|---|---|---|---|---|---|---|---|
| | | | | | Physical | Used | | Allocated | Unused |
| 1 | Router 1 | if2 | Router 1 | if3 | 1GB/s | a1 | Class 0 | 400M | x1 |
| | | | | | | | Class 1 | 200M | x2 |
| | | | | | | | Class 3 | 100M | x3 |
| 2 | Router 2 | if4 | RP | if5 | 1GB/s | a2 | Class 0 | 400M | x4 |
| | | | | | | | Class 1 | 200M | x5 |
| | | | | | | | Class 3 | 100M | x6 |
| 3 | RP | if6 | Router 3 | if7 | 1GB/s | a3 | Class 0 | 400M | x7 |
| | | | | | | | Class 1 | 200M | x8 |
| | | | | | | | Class 3 | 100M | x9 |
| | | | | | | | Class 0 | 400M | y1 |
| 4 | RP | if7 | Router 4 | if9 | 1GB/s | a4 | Class 1 | 200M | y2 |
| | | | | | | | Class 3 | 100M | y3 |
| 5 | RP | If10 | Fifth router | if11 | 1GB/s | a5 | Class 0 | 400M | y4 |
| | | | | | | | Class 1 | 200M | y5 |
| | | | | | | | Class 3 | 100M | y6 |
| 6 | Router 3 | If12 | - | - | 1GB/s | a6 | Class 0 | 400M | y7 |
| | | | | | | | Class 1 | 200M | y8 |
| | | | | | | | Class 3 | 100M | y9 |
| 7 | Router 4 | If13 | - | - | 1GB/s | a7 | Class 0 | 400M | z1 |
| | | | | | | | Class 1 | 200M | z2 |
| | | | | | | | Class 3 | 100M | z3 |
| | | | | | | | Class 0 | 400M | z4 |
| 8 | Fifth router | If14 | - | - | 1GB/s | a8 | Class 1 | 200M | z5 |
| | | | | | | | Class 3 | 100M | z6 |
| ... | ... | ... | ... | ... | ... | ... | ... | ... | ... |

As shown in Table 1, the resource table may include link ID, router ID, interface ID, link physical bandwidth (Link Bandwidth/Physical), use bandwidth (Link Bandwidth/Used), a multicasting class ID (Class ID), allocated bandwidth (Class BW/Allocated), and spare bandwidth information (class BW/ unused).

The link ID is an identifier indicating a connection between two neighboring routers in the multicasting network. When information about IDs of the two routers and interface IDs is stored in one link ID, it means that the two routers are connected to both ends of the link. On the other hand, when information about an ID of one router and an interface ID is stored, it means that one end of the link connects to the source or the receiving terminal.

The link physical bandwidth refers to a maximum bandwidth that can be physically supported by each link. The use bandwidth refers to an actually used bandwidth within the maximum supportable bandwidth. Furthermore, in the table, multicasting services are classified (Class 0, 1 and 3) based on a criterion such as priority. Each class includes allocated bandwidth and unused band information.

While Table 1 includes bandwidth information, the resource table may include network resource information, such as delay time information and delay variance information, as well as bandwidth information.

The topology/resource manager module 23 delivers the collected and stored data to the policy manager module 21. In order to control the network components according to a policy set by the operator using the data, the policy manager module 21 delivers the policy to the policy deploy module 22. The policy deploy module 22 translates the policy received from the policy manager module 21 into instructions that can be interpreted by network components such as a router, and delivers the instructions to the network components via the router connection module 25. When a new multicasting service is requested, the call admission control manager module 24 may determine whether to accept the multicasting service in cooperation with the topology/resource manager module 21.

The method for controlling the multicasting network using the bandwidth of the link between the routers at the multicasting service QoS controller 20 will be described by way of example.

When the first link has a bandwidth of 100 and the multicasting services are classified into four classes, the operator can allocate 30%, 20%, 15% and 10% of the bandwidth as unused maximum bandwidths to the respective service classes. It will be appreciated that the bandwidth allocation may depend on an operator's policy, and the sum of unused maximum bandwidths for the classes must equal 100% for spare resources of the link.

The operator's policy is inputted to the policy manager module 21 of the multicasting service QoS controller 20 via the operator interface 70. When receiving the allocation policy of the bandwidth for each class from the policy manager module 21, the policy deploy module 22 delivers the bandwidth allocation instructions to the routers 41 to 45 via the router connection module 25. Furthermore, the routers 41 to 45 control their input/output interfaces if1 to if14 so as to allocate the bandwidth for each class. That is, class 0 is allocated the maximum bandwidth of 30, class 1 the maximum bandwidth of 20, class 2 the maximum bandwidth of 15, and class 3 the maximum bandwidth of 10. After the bandwidth allocation is completed, the topology/resource manager module 23 receives bandwidth allocation information from the policy manager module 21, or collects bandwidth allocation information of each link via the router connection module 25.

When a new multicasting service is requested, the call admission control manager module 24 accepts the new service request only when spare bandwidth is greater than bandwidth needed for the new multicasting service. Determination results for the new service request and acceptance are reported to the operator interface 70. For example, when a first multicasting service of class 0 requiring a bandwidth of 20 is requested, the call admission control manager module accepts the request since the spare bandwidth is 30. When a second multicasting service of class 0 requiring a bandwidth of 25 is additionally requested, the call admission control manager module 24 does not accept the request since the current spare bandwidth is 10.

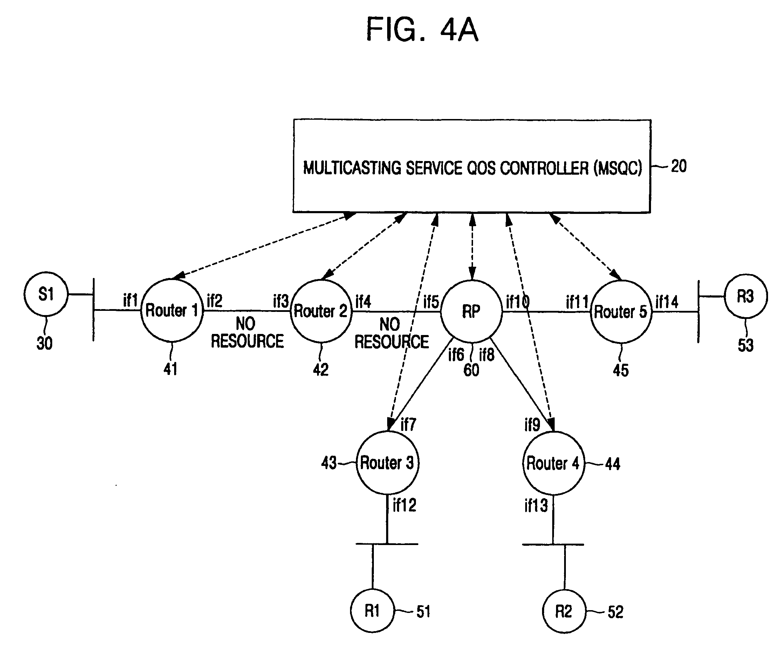

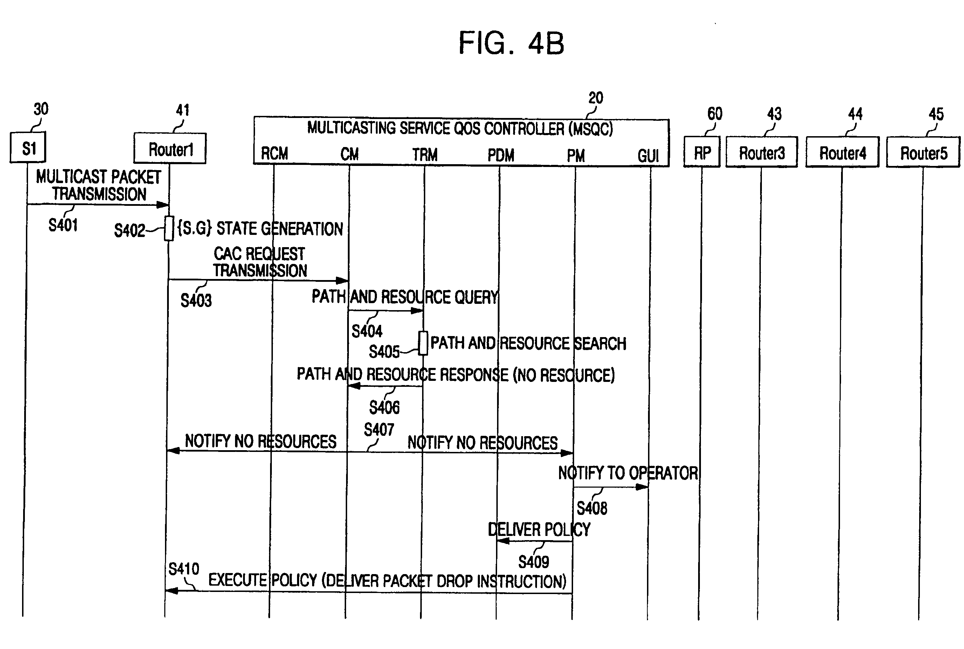

FIG. 4A is a block diagram of a multicasting network when a resource does not exist on a path from a source to a rendezvous point, and FIG. 4B is a flowchart of a method for controlling a multicasting service which is applied in the case of FIG. 4A according to another exemplary embodiment of the present invention.

The first source 30 transmits a multicasting packet to the first router 41 (S401). In response to receiving the multicasting packet, the first router 41 generates an (S,G) state (S402) and transmits a CAC request message to the call admission control manager module 24 via the router connection module 25 (FIG. 3) in the multicasting service QoS controller 20 (S403). The CAC request message may include information such as an IP address of the source 30, a multicasting group address, an IP address of the rendezvous point 60, a bandwidth, and a service class. The first router 41 should know a bandwidth or data rate of multicasting data in order to transmit the CAC request message. The first router 41 can know the bandwidth or data rate from, for example, a Type of Service/Diffserv Code Point (TOS/DSCP) field in the IP packet received from the source 30. Alternatively, the first router 41 can know the bandwidth or data rate through separate message exchange with the source 30.

In response to receiving the CAC request message, the call admission control manager module 24 determines whether there is unused bandwidth on the link from the first router 41 to the rendezvous point 60. For this purpose, the call admission control manager module 24 requests the topology/resource manager module 23 (FIG. 3) to query the link from the first router 41 to the rendezvous point 60 and unused resources (S404). The topology/resource manager module 23 searches the path from the first router 41 to the rendezvous point 60 and the resources on the path to determine whether to accept a request for service requiring a predetermined bandwidth (S405). Whether to accept such a request can be determined by referring to the unused bandwidth value for each link. In the example of FIG. 4, since the resources of the link between the first router 41 and second router 42 is insufficient, the topology/resource manager module 23 transmits a response message to the call admission control manager module 24 indicating that service acceptance is impossible (S406). Upon receipt of the response, the call admission control manager module 24 notifies the first router 41 and the policy manager module 21 (FIG. 3) in the multicasting service QoS controller 20 that there are insufficient resources between the first router 41 and the rendezvous point 60 (S407). This notification may include information about specific links having insufficient resources between the first router 41 and the rendezvous point 60. In response to receiving the notification, the policy manager module 21 notifies the operator of resource insufficiency via the operator interface 26 (S408). The operator can change the policy to solve this problem. The policy may include adjusting a maximum unused bandwidth for each class, stopping other multicasting services, and stopping other data packet transmission. Of course, such a policy may be stored in the policy manager module 21 in advance, and may be applied without being controlled by the operator, when needed. The policy manager module 21 transmits a policy for controlling the network to the policy deploy module 22 (S409). In this embodiment, the operator sets a packet drop policy for allowing the first router 41 to drop a packet, in which case such a policy is sent to the first router 41 (S410). Finally, the first router 41 checks a predetermined number of times or for a predetermined period of time, as to whether it is possible to accept the service by repeating the aforementioned processes (S403 to S410).

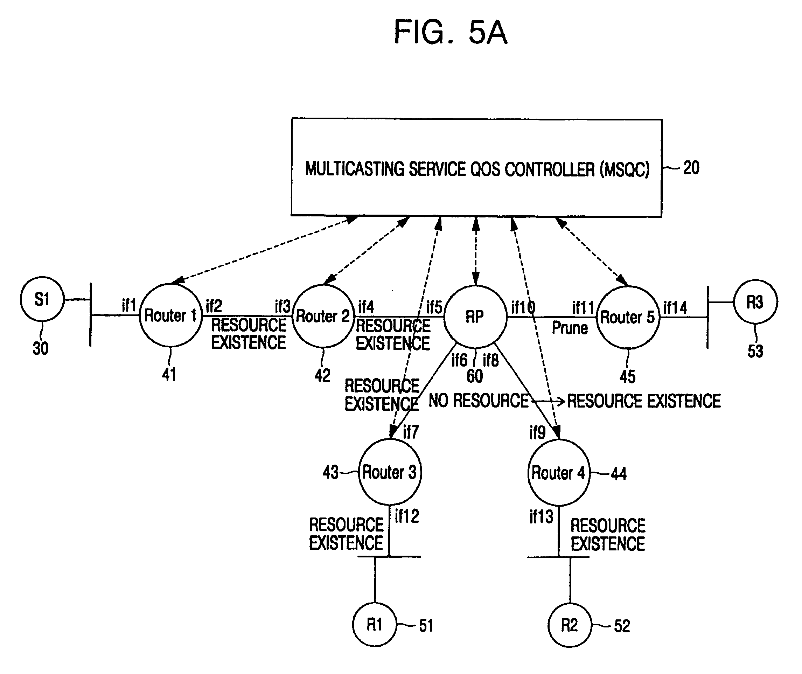

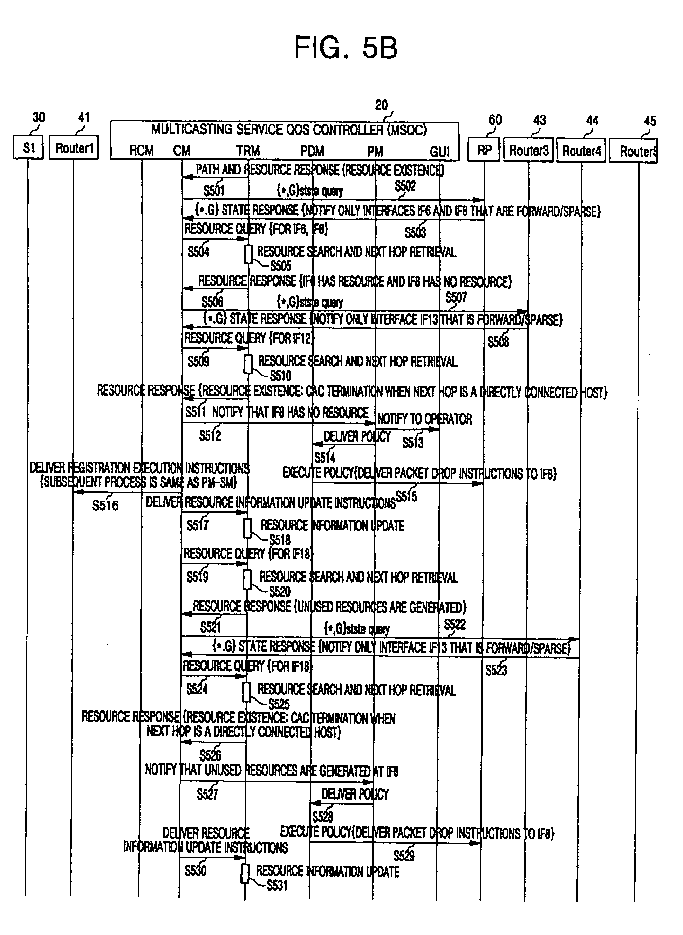

FIG. 5A is a block diagram of a multicasting network when a link having a resource and a link having no resource exist on a shared tree, and FIG. 5B is a flowchart of a method for controlling a multicasting service which is applied in the case of FIG. 5A according to another embodiment of the present invention.

The control method of FIG. 5 can be applied when a shared tree (*.G) is registered with the rendezvous point 60, and when if8 of the interfaces in the rendezvous point 60 is switched from an insufficient resource state to a sufficient resource state.

Upon receipt of a request from the call admission control manager module 24 (FIG. 3), the topology/resource manager module 23 retrieves unused resources between the first router 41 and the rendezvous point 60. Since the requested unused resources for the multicasting service exist, the topology/resource manager module 23 transmits a response message to the call admission control manager module 24 indicating that the service can be accepted (S501).

Upon receipt of the notification that the service between the first router 41 and the rendezvous point 60 can be accepted, the call admission control manager module 24 requests the rendezvous point 60 to query the state of the multicasting group G (S502). This state query is to determine whether the rendezvous point 60 outputs packets for the multicasting group G. In this case, when requesting to query the multicasting state, the call admission control manager module 24 may additionally transmit address information of the multicasting group so as to identify the multicasting group, the state of which is requested for query. In response to such a request for query, the rendezvous point 60 transmits a response message, including information about an interface at a forward state among the input/output interfaces, to the call admission control manager module 24 (S503). The response message includes information such as a multicasting group address and a list of interfaces that are at the forward state. In FIG. 5, since only if6 and if8 of the interfaces if5, if6, if8 and if10 of the rendezvous point 60 are at the forward state, the response message will contain if6 and if8.

The call admission control manager module 24 requests the topology/resource manager module 23 to query resource states of if6 and if8 at the forward state (S504). The topology/resource manager module 23 retrieves the resource states of if6 and if8 and the next hop router (S505). The topology/resource manager module 23 transmits a retrieved result to the call admission control manager module 24 (S506). As shown in FIGS. 5A and 5B, a response message indicating that there are unused resources in if6 but not in if8 is sent to the call admission control manager module 24 (S506). The call admission control manager module 24 then requests the third router 43, which is the next hop router of if6 having the unused resources, to query the multicasting state (S507). In response thereto, the third router 43 similarly transmits a list of interfaces at the forward state to the call admission control manager module 24 (S508). As shown in FIGS. 5A and 5B, the third router 43 notifies the call admission control manager module 24 of the fact that if12 is at the forward state. In response thereto, the call admission control manager module 24 further requests to query the resources of if12 (S509), and the topology/resource manager module 23 retrieves if12 and the next hop router, and sends a retrieval result to the call admission control manager module 24 (S510 and 511). This process continues until the next hop router is directly connected to the receiving terminal.

Meanwhile, the call admission control manager module 24 notifies the policy manager module 21 that the unused resources of if8 are insufficient (S512). The policy manager module 21 notifies the operator of that fact via the operator interface 26 (S513), and transmits the policy received from the operator to the policy deploy module 22 (S514). The policy deploy module 22 transmits multicasting drop instructions according to the operator's policy to the rendezvous point 60 (S515). The call admission control manager module 24 transmits a registration modification message to the first router 41 so as to reset a multicasting service environment based on the network topology as modified so far (S516).

After completing the above-described call acceptance determining process, the multicasting service QoS controller 20 can transmit the multicasting data using the same method as in the typical PIM-SM.

That is, the call admission control manager module 24 delivers resource information update instructions to the topology/resource manager module 23 in order to reflect the changed policy (S517), and the topology/resource manager module 23 updates the resource information (S518).

The service is not yet provided, even though the receiving terminals are connected to if8 of the rendezvous point 60. The call admission control manager module 24 continues to request the topology/resource manager module 23 to query the resources of if8 (S519). When the operator's policy is executed and unused resources are generated, the call admission control manager module 24 determines whether the unused resources of the router interface are sufficient, as in the above-described process (S520 to S526).

The call admission control manager module 24 notifies the policy manager module 21 that service acceptance for the tree is possible (S527), and accordingly the policy manager module 21 delivers packet drop release instructions to the policy deploy module 22 (S528). The policy deploy module 22 then delivers packet drop release instructions for the multicasting group of if8 to the rendezvous point 60 (S529).

After executing the packet drop release instructions, the call admission control manager module 24 delivers the resource update instructions to the topology/resource manager module 23 (S530), and the topology/resource manager module 23 then updates the resource states of the links (S531).

The above-described control method has been applied for the rendezvous point 60, but may be applied for all of the routers on the shared tree.

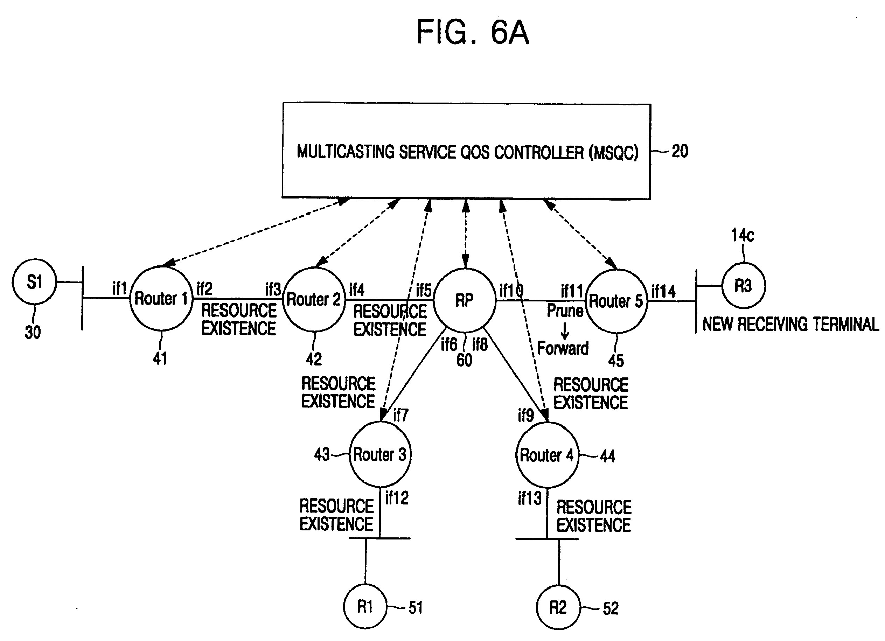

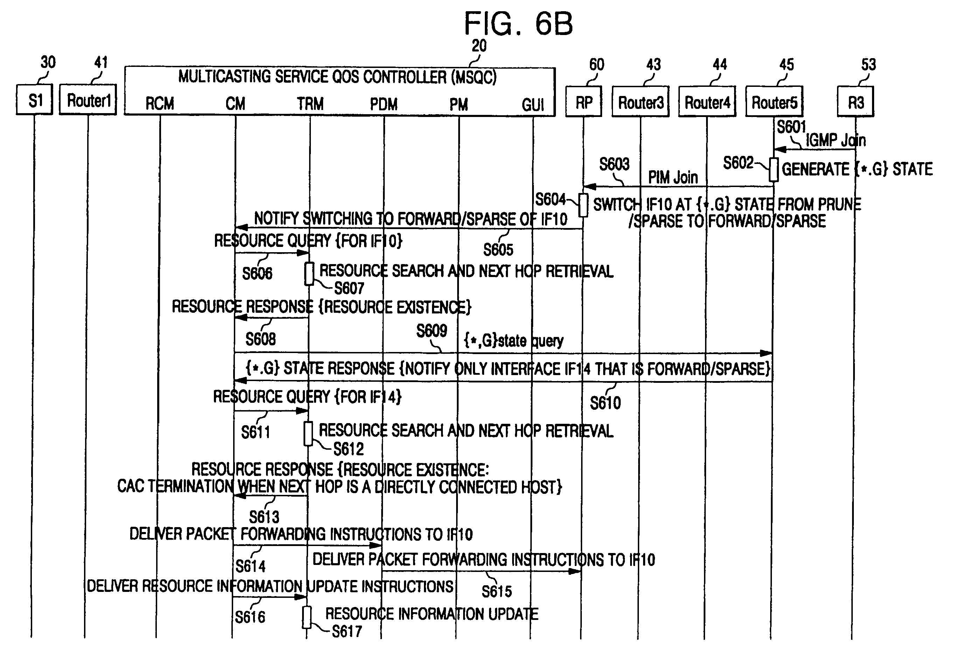

FIG. 6A is a block diagram of a multicasting network when an input/output interface of a rendezvous point is switched from a prune state to a forward state, and FIG. 6B is a flowchart of a method for controlling a multicasting service which is applied in the case of FIG. 6A according to another embodiment of the present invention.

The prune state of the input/output interface is a state wherein there are no receiving terminals or routers routing packets via the input/output interface. On the other hand, the forward state of the input/output interface is opposite to the prune state, and is a state wherein there is a terminal or router receiving packets via the input/output interface. For PIM-SM, the prune state may be indicated as Prune/Sparse, and the forward state may be indicated as Forward/Sparse. For PIM-DM, the prune state may be indicated as Prune/Dense and the forward state may be indicated as Forward/Dense.

If a third new receiving terminal 53 is connected to the fifth router 45, the third receiving terminal 53 transmits an IGMP join message to the fifth router 45 in order to join in the multicasting group G (S601). The fifth router 45 generates a (*,G) state for the multicasting group G (S602), and transmits a PIM join message to the rendezvous point 60 in order to join in a shared tree (S603). In this case, the rendezvous point 60 switches if10 from the prune state to the forward state (S604).

The rendezvous point 60 transmits an if10 state switching message to the call admission control manager module 24 (FIG. 3) of the multicasting service QoS controller 20 (S605). In this case, the state switching message may contain information, such as a multicasting group address and a list of interfaces switched to the forward state. In response to receiving the message, the call admission control manager module 24 requests the topology/resource manager module 23 to query a resource of if 10 (S606), and the topology/resource manager module 23 retrieves the resource state of if 10 and the next hop router according to the above-described method (S607). In this embodiment, the topology/resource manager module 23 transmits a response message, indicating that there are resources, to the call admission control manager module 24 (S608). That is, the call admission control manager module 24 queries a (*,G) state to the fifth router 45, which is the next hop router of if10 (S609). The fifth router 45 responds with transmission of the information for if14 at the forward state to the call admission control manager module 24 (S610). Upon receipt of the response, the call admission control manager module 24 again requests the topology/resource manager module 23 to query the resources of if14 (S611). The topology/resource manager module 23 retrieves the resource information of if14 and the next hop router (S612), and notifies the call admission control manager module 24 of the resource information and the next hop router (S613). As described in FIG. 5, such a resource retrieving process is performed on the router 45 directly connected to the receiving terminal 53. In the example of FIG. 6, since the fifth router 45 is directly connected to the third receiving terminal 53, there is no more resource search process.

Thereafter, the call admission control manager module 24 allows if10 to deliver packet forward instructions to the policy manager module 21 (S614), and the policy deploy module 22 transmits instructions to forward a packet to the rendezvous point 60 via if10 (S615). The call admission control manager module 24 sends instructions to allow the topology/resource manager module 23 to update the resource state of the network (S616), and accordingly the topology/resource manager module 23 performs the resource update (S617).

It will be appreciated that the above-described procedure may be equally applied to all of the routers on the shared tree, as well as to the rendezvous point 60.

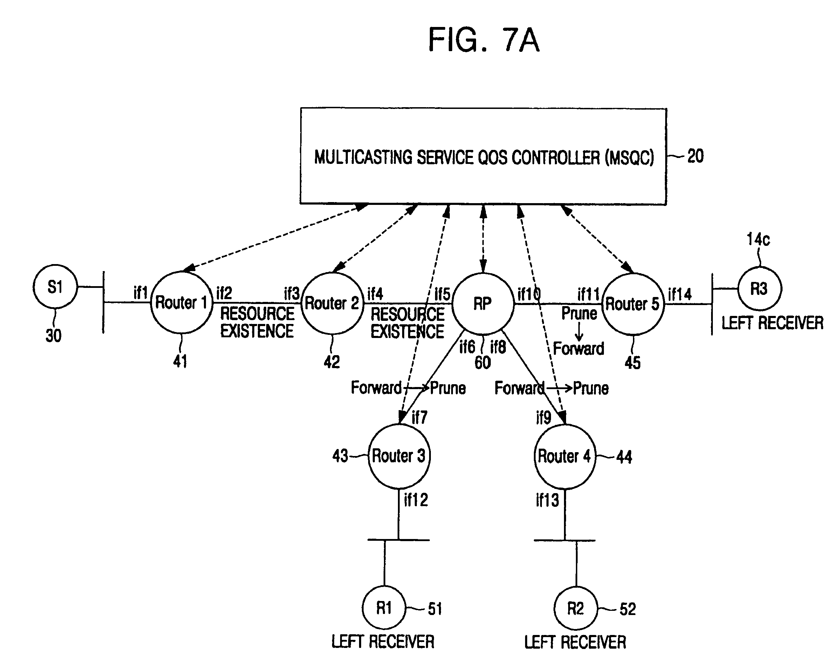

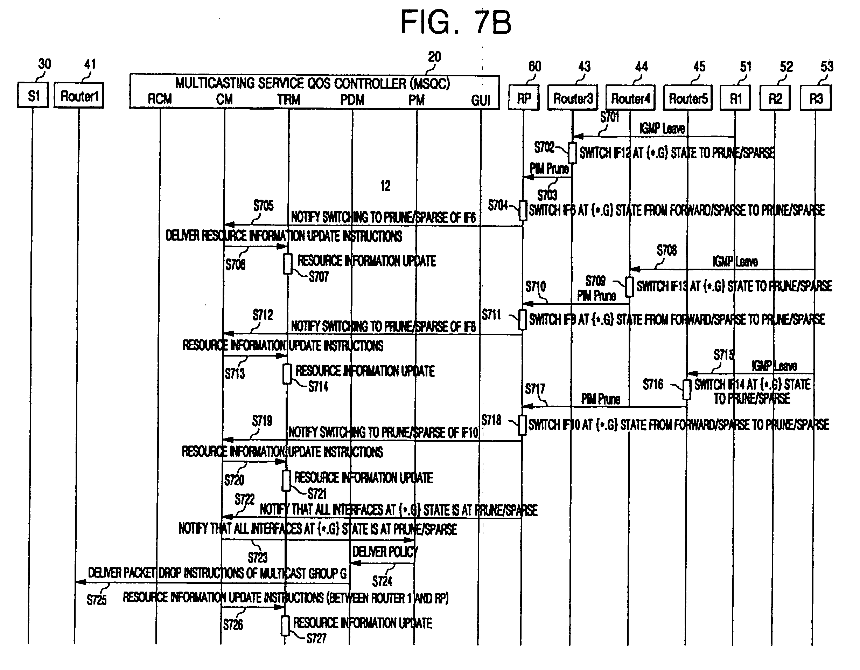

FIG. 7A is a block diagram of a multicasting network when an input/output interface of a rendezvous point is switched from a forward state to a prune state, and FIG. 7B is a flowchart of a method for controlling a multicasting service which is applied in the case of FIG. 7A according to another embodiment of the present invention.

The first receiving terminal 51 desiring to leave the multicasting group transmits an IGMP leave message to the third router 43 (S701). Since the third router 43 receiving the message has to transmit a multicasting packet via the if12 interface, it switches the if12 packet transmission state to the prune state (S702), and transmits a PIM prune message to the rendezvous point 60 (S703).

The rendezvous point 60, upon receiving the PIM prune message, switches if6 from the (*,G) state to the prune state for the same reason as in the third router 43 (S704). The rendezvous point 60 then transmits the prune state switching message of if6 to the call admission control manager module 24 (FIG. 3) of the multicasting service QoS controller 20 (S705). In response to receiving the message, the call admission control manager module 24 delivers resource information update instructions to the topology/resource manager module 23 (S706), and accordingly, the topology/resource manager module 23 retrieves and updates resource information for each link in the network (S707). In this case, the topology/resource manager module 23 performs the resource update on if6 of the rendezvous point 60 and if12of the third router 43 in the prune state.

The leaving process of the second and third receiving terminals 52 and 53, respectively, may be performed in the same manner as the above-described leaving process of the first receiving terminal 51 (S708 to S721).

The rendezvous point 60 itself is switched to the prune state as all of the first receiving terminals 51, 52 and 53 leave the multicasting group G. That is, the rendezvous point 60 includes only the interfaces in the prune state. If the multicasting data is transmitted from the first router 41 to the rendezvous point 60, network resources are wasted since such data has no destination. The method for controlling a multicasting service in order to solve such a problem will now be described.

The rendezvous point 60 notifies the policy manager module 21 (FIG. 3), via the call admission control manager module 24, that all of the interfaces are switched from the (*,G) state to the prune state (S722 and S723). The policy manager module 21 then delivers a policy for such a state to the policy deploy module 22 (S724), and the policy deploy module 22 delivers the policy to the first router 41 (S725). In FIG. 7, if all of the interfaces of the rendezvous point 60 are switched to the prune state, a policy is applied which allows the first router 41, directly connected with the multicasting source 30, to drop a packet belonging to the multicasting group G. This is in order to prevent waste of resources due to packet transmission, which is performed when there is no receiving terminal, by not transmitting the packets from the first router41 to the multicasting source 30.

After delivering the policy instructions, the call admission control manager module 24 controls the topology/resource manager module 23 to update the resources between the first router 41 and the rendezvous point 60 (S726). Under this control, the topology/resource manager module 23 performs resource update (S727).

The method for controlling a multicasting service, as described above, can be applied not only to the case where the interface of the rendezvous point 60 is switched to the prune state, but also to the case where the interfaces of the routers on the shared tree are switched to the prune state. Furthermore, while the multicasting group leaving operation of the receiving terminal in FIG. 7 has been described based on IGMP v2, it can be equally applied to IGMP v1.

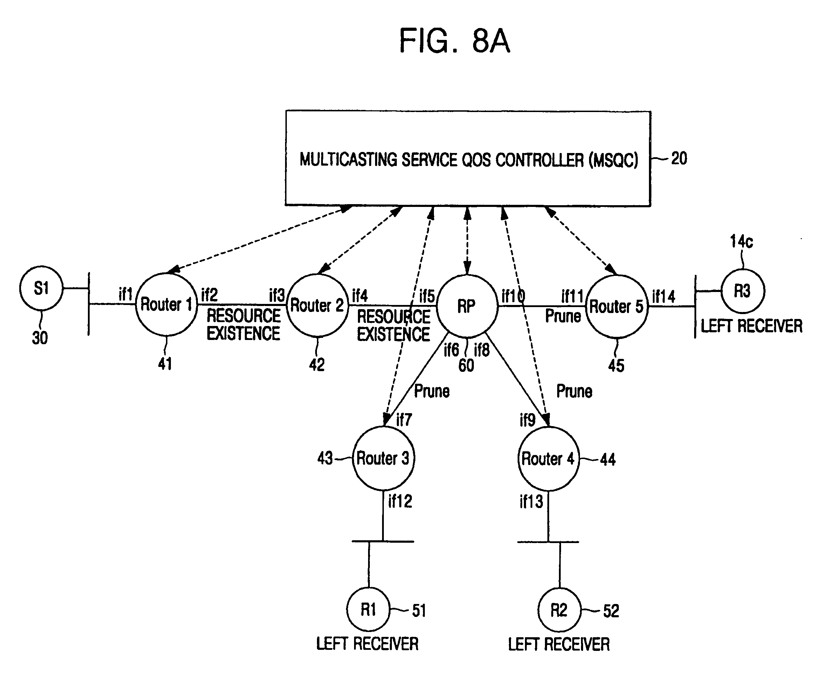

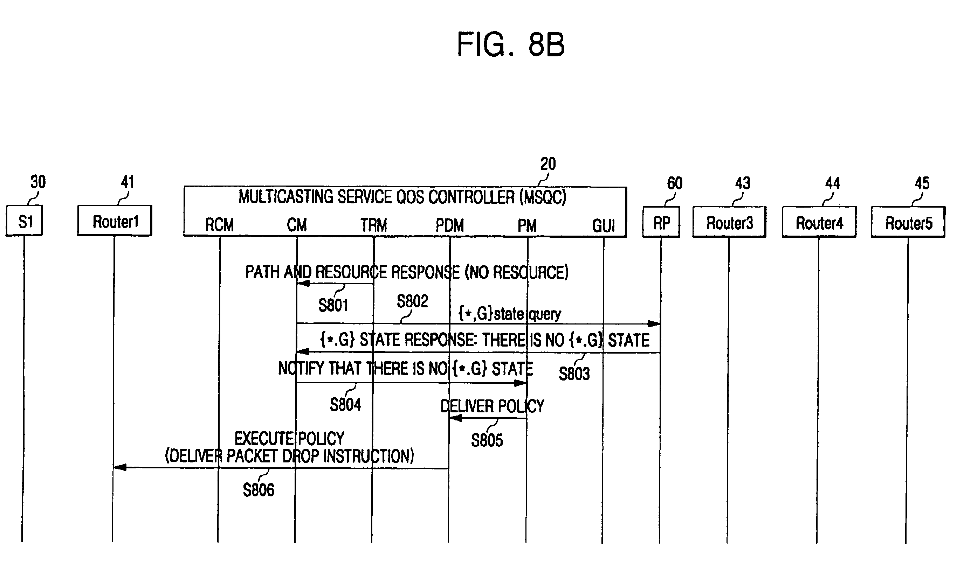

FIG. 8A is a block diagram of a multicasting network when a shared tree for a multicasting group is not formed on a rendezvous point, and FIG. 8B is a flowchart of a method for controlling a multicasting service which is applied in the case of FIG. 8A according to another embodiment of the invention.

In response to a request from the call admission control manager module 24 to query resources of the link between the first router 41 and the rendezvous point 60, the topology/resource manager module 23 retrieves unused resources of the link. If there are unused resources of the link between the first router 41 and the rendezvous point 60, the topology/resource manager module 23 transmits a response message, indicating that a new multicasting service can be accepted, to the call admission control manager module 24 (S801). In response to the response message, the call admission control manager module 24 transmits a (*,G) state query request message to the rendezvous point 60 (S802). Since there is no service receiving terminal belonging to the multicasting group G in the rendezvous point 60 receiving the message, the rendezvous point 60 sends a response message indicating that the (*,G) state does not exist (S803). The response message is delivered to the policy manager module 21 via the call admission control manager module 24 (S804). The policy manager module 21 transmits a preset policy to the policy deploy module 22 (S805). This policy is delivered to the first router 41 (S806). Policies applicable in such a state may include a policy of dropping a multicasting group packet at the first router 41.

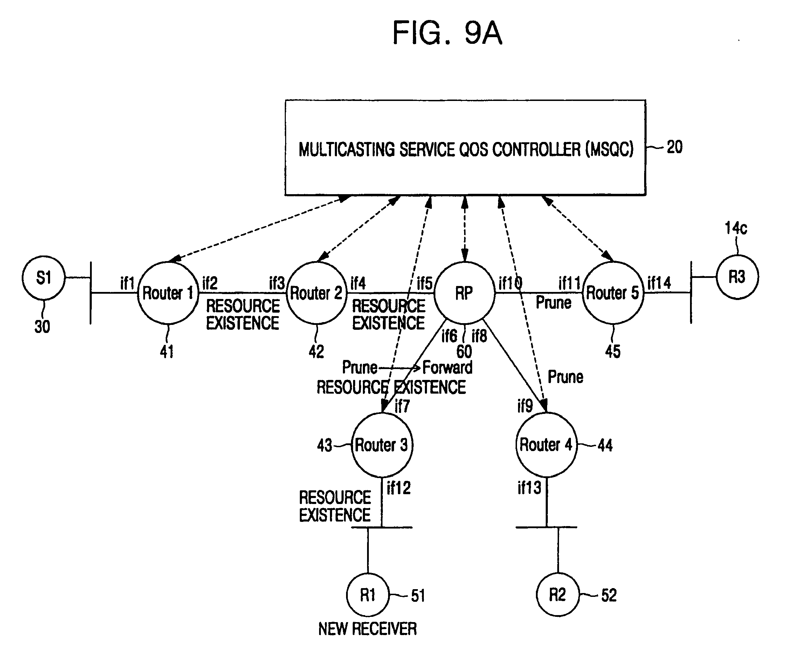

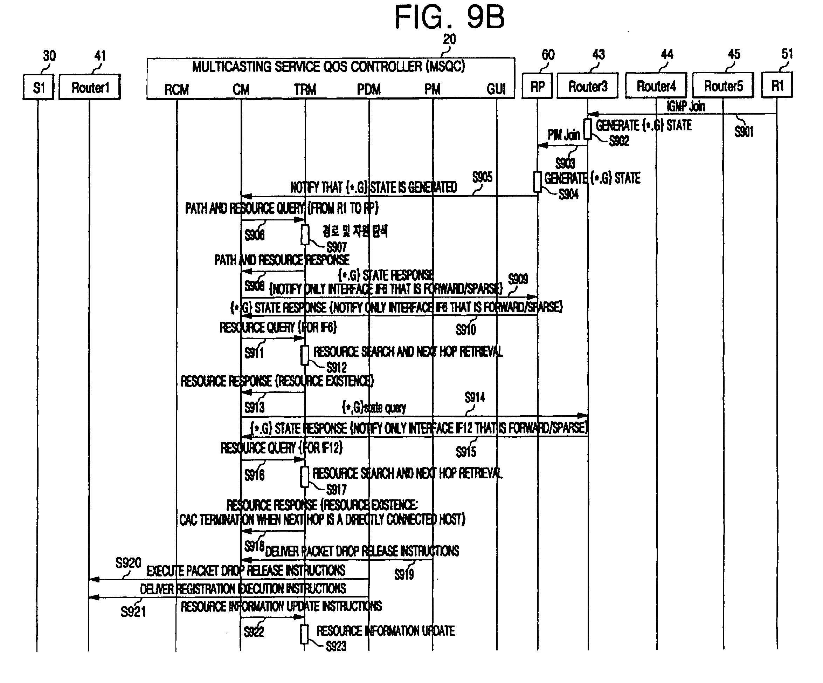

FIG. 9A is a block diagram of a multicasting network when a shared tree for a multicasting group is formed on a rendezvous point, and FIG. 9B is a flowchart of a method for controlling a multicasting service which is applied in the case of FIG. 9A according to another embodiment of the invention.

The first receiving terminal 51, desiring to join in the multicasting group G transmits an IGMP join message to the third router 43 (S901). In response to that message, the third router 43 generates a (*,G) state (S902), and transmits a PIM join message to the rendezvous point 60 calling for the rendezvous point 60 to join in the shared tree (S903). Since the rendezvous point 60 has not provided a service for the multicasting group G, it generates a new (*,G) state (S904). The rendezvous point 60 then transmits a notification message indicating state generation to the call admission control manager module 24 of the multicasting service QoS controller 20 (S905). Since the processes (S906 to S918) have been described above, their description will be omitted here. After the new multicasting service acceptance is completed, the policy manager module 21 delivers packet drop release instructions and registration execution instructions to the first router 41 via the policy deploy module 22 (S919, S920 and S921). Under the control of the call admission control manager module 24 (S922), the topology/resource manager module 23 updates the network resources (S923).

While the system and method for controlling a multicasting service mainly using PIM-SM protocol have been described by way of example, the scheme described herein may be easily applied by those skilled in the art to other protocols, such as DVRMP, MOSPF, CBT, PIM-DM and PIM-SM, for multicasting.

As described above, according to the system and method for controlling a multicasting service of the present invention, when a multicasting source or a receiving terminal is newly registered or a router or the receiving terminal leaves an existing multicasting group, the topology and resource state of the network are retrieved, and a determination is made as to whether to provide a new multicasting service based on the retrieved network resource state. Thus, a multicasting-based high-quality multimedia service can be provided to users.

While the present invention has been described with reference to exemplary embodiments thereof, it will be understood by those skilled in the art that various changes in form and detail may be made therein without departing from the scope of the present invention as defined by the following claims.

## Claims

1. A multicasting service network, comprising:
at least one receiving terminal for receiving a multicasting service;
at least one router for relaying a multicasting service packet from a multicasting source to said at least one receiving terminal; and
a multicasting service QoS controller for collecting network resource states of said at least one router so as to recognize spare network resources, and for determining whether said at least one router receives a multicasting packet from a new multicasting source or transmits the multicasting packet to a new receiving terminal.

2. The network according to claim 1, wherein the multicasting service network transmits the multicasting packet using at least one of Distance Vector Multicast Routing Protocol (DVMRP), Multicast Open Shortest Path First (MOSPF), Core Based Tree (CBT), Protocol Independent Multicast-Dense Mode (PIM-DM), and Protocol Independent Multicast-Sparse Mode (PIM-SM).

3. The network according to claim 1, wherein the network resources comprise at least one of bandwidth, delay time, and delay variance information.

4. The network according to claim 1, wherein the multicasting service QoS controller compares resources needed for new multicasting packet transmission and reception to spare network resources, and controls a router having insufficient spare network resources to drop the new multimedia packet.

5. The network according to claim 1, wherein the multicasting service QoS controller classifies the multicasting services according to at least one class and allocates, to each said at least one class, maximum network resources which is a maximum amount of available network resources.

6. The network according to claim 5, wherein the multicasting service QoS controller decreases the maximum network resources allocated to a class having spare network resources, and increases the maximum network resources allocated to a class to which the new multicasting packet belongs when there are insufficient spare resources for new multicasting packet transmission and reception.

7. The network according to claim 1, wherein the multicasting service QoS controller controls said at least one router to drop the multicasting packet, said at least one router comprising an input/output interface having a multicasting packet transmission state comprising a prune state.

8. The network according to claim 1, wherein the multicasting service QoS controller re-collects the network resource state when at least one event of registering or leaving of the receiving terminal for multicasting service, switching of a multicasting packet transmission state of an input/output interface of a router, and lapse or expiration of a predetermined update time occur.

9. A multicasting service QoS controller system, comprising:
a router connection module for communicating with at least one router;
a topology/resource manager module for collecting network resources
of said at least one router using the router connection module to recognize spare network resources; and
a call admission control manager module for receiving the spare network resources from the topology/resource manager module, and for determining whether said at least one router receives a multicasting packet from a new multicasting source or transmits the multicasting packet to a new receiving terminal.

10. The system according to claim 9, further comprising:
a policy manager module for managing a network operation policy according to the network resource state; and
a policy deploy module for converting and delivering the network operation policy as instructions in a language that can be interpreted by said at least one router.

11. The system according to claim 9, wherein the network resources comprise at least one of inter-router bandwidth, delay time, and delay variance information.

12. The system according to claim 9, wherein the topology/resource manager module comprises a resource management table, and the resource management table stores at least one of router identification (ID), interface ID, total bandwidth, multicasting class, class bandwidth, total used bandwidth, and unused bandwidth information.

13. A method for controlling a multicasting service, said method comprising the steps of:
collecting network resource information from at least one router to recognize spare network resources of each said at least one router;
requesting, by one of a new multicasting receiving terminal and a new multicasting source, one of said at least one router to provide the multicasting service; and
determining whether said at least one router receives a multicasting packet from the new multicasting source using the spare network resources or transmits the multicasting packet to the new receiving terminal.

14. The method according to 13, wherein the step of collecting the network resources comprises the step of collecting at least one of inter-router bandwidth, inter-router delay time, and inter-router delay variance information.

15. The method according to 13, further comprising the step of comparing resources needed to transmit and receive the new multicasting packet to spare network resources, and allowing a router having insufficient spare network resources to drop the new multimedia packet.

16. The method according to 13, further comprising the step of classifying multicasting services according to at least one class and allocating maximum network resources to each said at least one class.

17. The method according to claim 16, further comprising the step of decreasing the maximum network resources allocated to a class having spare network resources and increasing the maximum network resources allocated to a class to which a new multicasting packet belongs when there are insufficient spare resources for new multicasting packet transmission and reception.

18. The method according to claim 13, further comprising the step of controlling said at least one router to drop a multicasting packet, said at least one router comprising an input/output interface having a multicasting packet transmission state comprising a prune state.

19. The method according to claim 13, further comprising the step of controlling to re-collect network resource states of said at least one router when at least one event of registering or leaving of a receiving terminal for multicasting service, switching of a multicasting packet transmission state of an input/output interface of a router, and lapse or expiration of a predetermined update time occur.

20. A method for controlling a multicasting service using a Protocol Independent Multicast-Sparse Mode (PIM-SM), said method comprising the steps of:
requesting, by a new multicasting source, an arbitrary router to provide a multicasting service;
collecting unused bandwidth information of a link between said arbitrary router and a rendezvous point; and
when the unused bandwidth of the link is smaller than a bandwidth needed to use a new multicasting service, controlling said arbitrary router not to receive a multicasting packet from the new multicasting source.
